# EUROPÄISCHE PATENTANMELDUNG

(11) **EP 0 572 702 A1**
(43) Veröffentlichungstag der Anmeldung: **08.12.1993**
(21) Anmeldenummer: 92109515.4
(22) Anmeldetag: 05.06.1992
(51) Int. Cl.: A01K 1/015

(54) **Tierstreu und Verfahren zu ihrer Herstellung**

(71) Anmelder: Solvay Umweltchemie GmbH, D-30173 Hannover (DE)
(72) Erfinder: Legat, Werner, W-3000 Hannover 51 (DE); Bauer, Gert, W-5657 Haan-Gruiten (DE)
(74) Vertreter: Lauer, Dieter, Dr.

(57) **Zusammenfassung**

Beschrieben wird eine Tierstreu, erhältlich durch Vermischen von Zellulose oder Zellulose enthaltenden Materialien, Beschwerungsmittel und Verdicker. Als Ausgangsmaterial kann man landwirtschaftliche oder industrielle Rückstände oder Materialien aus der Wertstoffrückführung, beispielsweise Holzabfälle, Papierabfälle, Zeolithe, Füllstoffe oder Pigmente verwenden.

## Beschreibung

Die Erfindung bezieht sich auf eine neuartige Tierstreu und ein Verfahren zu ihrer Herstellung.

Tierstreu auf Zellulosebasis, beispielsweise in Form von Sägemehl, ist bereits bekannt. Aufgabe der vorliegenden Erfindung ist es, eine verbesserte Tierstreu anzugeben.

Diese Aufgabe wird durch die erfindungsgemäße Tierstreu gelöst.

Die erfindungsgemäße Tierstreu umfaßt
a) Zellulose, Zellulosederivate und/oder Zellulose enthaltende Materialien,
b) Beschwerungsmittel,
c) Verdicker und/oder Bindemittel,
wobei die Tierstreu eine Schüttdichte oberhalb von etwa 500 kg/m³ aufweist und in Form von Partikeln einer Teilchengröße oberhalb von 1 mm vorliegt.

Die erfindungsgemäße Tierstreu kann natürlich vorkommende Zellulose verschiedenster Quellen enthalten. Zellulose mit je nach Herkunft unterschiedlichen Kettenlängen, beispielsweise mit bis zu 3000 wiederkehrenden Monomer-Glucose-Einheiten, kann verwendet werden.

Im erfindungsgemäßen Mittel können natürliche oder industriell hergestellte hydrophile Zellulosederivate enthalten sein, beispielsweise Zellstoff, Hemizellulose oder Alkalizellulose.

Bevorzugt enthält die erfindungsgemäße Tierstreu Zellulose und/oder Zellulosederivate enthaltende Materialien pflanzlicher, z.B. landwirtschaftlicher oder industrieller Herkunft. Insbesondere werden darunter Holz oder durch die Verarbeitung von Holz gewonnene Produkte oder Produkte, die Holz oder aus Holz hergestellte Produkte enthalten, beispielsweise Papier, Pappe, verleimtes Holz. Brauchbar sind aber auch holzartige Substanzen, beispielsweise Stroh, wie Reisstroh oder Getreidestroh, und dessen direkte Verarbeitungsprodukte, Rückstände der Stärkeherstellung, z.B. Kartoffelschalen, Rückstände der Zuckerindustrie, z.B. ausgelaugte Rübenschnitzel etc.

Bevorzugt enthält die erfindungsgemäße Tierstreu ein Zellulose enthaltendes Material, insbesondere Holz, Holzverarbeitungsprodukte oder Stroh, vorzugsweise Reis-, Hafer-, Weizen-, Roggen- oder Gerstestroh.

Ganz besonders bevorzugt enthält die erfindungsgemäße Tierstreu Zellulose, Zellulosederivate und/oder Zellulose enthaltende Materialien, die als Rückstand bei der landwirtschaftlichen oder industriellen Verarbeitung von Zellulose oder Zellulose enthaltenden Materialien anfallen. Gleichermaßen bevorzugt enthält die erfindungsgemäße Tierstreu Zellulose, Zellulosederivate und/oder Zellulose enthaltende Materialien, die aus der Wertstoffrückführung stammen.

Hervorragend geeignet sind beispielsweise Abfälle aus der holzverarbeitenden Industrie wie Holz-, Spanplatten- oder Laminatholzschnitzel, Sägemehl, Abfälle der Papierindustrie, der Lebensmittelindustrie, verbrauchte Holzprodukte wie Altpalletten, Holzkisten, Möbel, Spanplatten, Bahnschwellen oder beispielsweise auch Filterhilfsmittel auf Zellulosebasis.

Es wird später noch beschrieben, daß die Zellulose, das Zellulosederivat und/oder Zellulose enthaltende Materialien vor ihrer Anwendung zur Herstellung der Tierstreu zweckmäßig auf eine Partikelgröße von nicht mehr als 1 mm zerkleinert werden, sofern diese Materialien nicht bereits derart zerkleinert vorliegen.

Die erfindungsgemäße Tierstreu erhält weiterhin ein Beschwerungsmittel. Im Prinzip können beliebige Materialien, insbesondere anorganische Materialien verwendet werden. Voraussetzung ist natürlich, daß sie gesundheitlich unbedenklich sind (dies gilt selbstverständlich auch für andere Bestandteile der Tierstreu) und eine entsprechend hohe Dichte aufweisen, zweckmäßig eine Dichte oberhalb von etwa 2 g/cm³. Gut geeignet sind Mineralien, die beispielsweise auch als Zeolithe, Füllstoffe in der Kunststoffherstellung oder als Pigmente verwendet werden. Sehr gut geeignet sind beispielsweise Schwerspat oder Titandioxid. Feldspat, Calciumcarbonat sowie Calciumcarbonat enthaltende Mineralien wie Marmor sind aber auch gut geeignet.

Besonders gut geeignet zur Inkorporation als Beschwerungsmittel in der erfindungsgemäßen Tierstreu sind anorganische Materialien, die bei der Herstellung oder Verarbeitung solcher Materialien als Abfallprodukte anfallen. Beispielsweise kann das erfindungsgemäße Mittel Abfälle enthalten, wie sie bei der Gewinnung und Weiterverarbeitung von Mineralien wie Feldspat oder Marmor anfallen. Besonders gut geeignet für die Anwendung zur Herstellung des erfindungsgemäßen Mittels sind Abfälle, Rückstände oder auch Fehlchargen von Füllstoff-, Pigment-, Zeolith- oder Kontrastmittelprodukten, z.B. auf Titandioxid- oder Bariumsulfat-Basis.

Es wird später noch beschrieben, daß das Beschwerungsmittel vor seiner Anwendung und erfindungsgemäßen Tierstreu zweckmäßig auf Partikelgrößen unterhalb von etwa 0,1 mm zerkleinert wird. Sofern es nicht bereits derartig zerkleinert vorliegt.

Die erfindungsgemäße Tierstreu enthält weiterhin einen Verdicker. Der Verdicker soll die Eigenschaften, insbesondere die Wasserabsorptionsfähigkeit der Ausgangsmaterialien verbessern. Gut geeignet als Verdicker sind bekanntermaßen wasserabsorbierende organische und anorganische Materialien, beispielsweise Kieselsäure, silikatische Mineralien, Zeolithe und Alumosilikate natürlicher oder synthetischer Herkunft. Sehr gut geeignet ist beispielsweise natürlich vorkommende Kieselsäure, z.B. Kieselgur, sowie synthetische Kieselsäure, beispielsweise amorphe Kieselsäure, insbesondere des Aerosil-Typs. Sehr gut geeignet sind auch Bentonite, Laponite, Magnesiumsilikate, Zeolithe. Abfälle oder Fehlchargen aus der Herstellung oder Verarbeitung von Kieselsäure, silikatischen Materialien, Zeolithen oder Alumosilikaten eignen sich ebenfalls sehr gut zur Anwendung in der erfindungsgemäßen Tierstreu.

Außer den vorstehend beschriebenen anorganischen Verdickern eignen sich aber auch organische Verdicker zur Anwendung in der erfindungsgemäßen Tierstreu. Beispielsweise geeignet ist auch hochfein zerkleinerte Zellulose, wie sie beispielsweise als Filterhilfsmittel verwendbar ist. Natürlich sind auch andere Filterhilfsmittel verwendbar. Natürlich kann man auch bereits gebrauchte Filterhilfsmittel verwenden. Geeignet sind weiterhin Zellulosederivate, z.B. Zelluloseester oder Zelluloseether.

Sehr gut geeignet sind auch organische Polymere mit hohem Wasserbindungsvermögen, beispielsweise Polyacrylate, Natriumsalze von Polyacrylaten, Poly(alkylacrylate) und deren Alkalisalze und ähnliche Verbindungen. Solche Stoffe sind als "Superabsorbents" bekannt.

Selbstverständlich kann man auch Gemische von Verdickern einsetzen.

Eine besonders bevorzugte Ausführungform der erfindungsgemäßen Tierstreu enthält sowohl einen Verdicker, z.B. Bentonit, als auch ein "Superabsorbent", insbesondere ein Polyacrylat. Das Gewichtsverhältnis von Verdicker zu "Superabsorbent" beträgt vorteilhafterweise etwa 10:1 bis 50:1. Die Wirkung der anorganischen Verdicker wird hier um ein Vielfaches verstärkt.

Weiterhin kann die erfindungsgemäße Tierstreu auch ein Bindemittel enthalten. Dies ist dann notwendig, wenn die Bestandteile der Tierstreu nicht ausreichend aneinander haften, beispielsweise wenn das Zellulosematerial aus glatten Partikeln besteht. Ein besonders gutes Bindemittel ist Bentonit.

Zweckmäßig liegen die vorstehend beschriebenen Bestandteile, also Zellulose oder deren Derivate, Beschwerungsmittel und Verdicker, nicht als heterogenes Gemisch vor, sondern als partikelförmiges Agglomerat. Ein solches Agglomerat ist nach den später noch zu beschreibenden erfindungsgemäßen Herstellverfahren erhältlich.

Die erfindungsgemäße Tierstreu kann noch Zusätze enthalten, die die anwendungstechnischen Eigenschaften weiter verbessern.

Beispielsweise kann ein Desinfektionsmittel wie mineralsaure Tonerde, insbesondere Aluminiumsulfat, oder Peroxid-Verbindungen wie Calciumperoxid, enthalten sein.

Die erfindungsgemäße Tierstreu kann Verrottungshilfsmittel, z.B. Calciumperoxid enthalten.

Die erfindungsgemäße Tierstreu kann weiterhin ein die geruchsbindende Wirkung verstärkendes Mittel, bevorzugt ein basisches Mittel, insbesondere ein kohlensaures Alkalimetallsalz, z.B. Natriumcarbonat oder Natriumhydrogencarbonat enthalten. Selbstverständlich können auch noch andere Hilfsstoffe vorhanden sein, z.B. Duftstoffe oder Farbstoffe.

Der Gehalt der einzelnen Komponenten in der erfindungsgemäßen Tierstreu kann in einem weiten Bereich schwanken. Die folgenden Gewichtsangaben beziehen sich auf das Gesamtgewicht der fertigen Tierstreu als 100 Gew.-%.

Die unter a) genannte Zellulose bzw. Zelluloseprodukte können in einer Menge von 20 bis 60 Gew.-%, vorzugsweise 40 bis 50 Gew.-%, das Beschwerungsmittel in einer Menge von 20 bis 70 Gew.-%, vorzugsweise von 40 bis 60 Gew.-%, und der Verdicker in einer Menge von 0,5 bis 50 Gew.-%, vorzugsweise von 1 bis 20 Gew.-%, insbesondere von 4 bis 8 Gew.-% in der Tierstreu enthalten sein.

Das Desinfektionsmittel kann in einer Menge von 0 bis 4 Gew.-%, vorzugsweise 1 bis 3 Gew.-%, das Verrottungshilfsmittel in einer Menge von 0 bis 15 Gew.-%, vorzugsweise 4 bis 8 Gew.-%, das die Geruchsbindung verstärkende Mittel in einer Menge von 0 bis 15 Gew.-%, vorzugsweise von 5 bis 10 Gew.-%, und Duft- und Farbstoffe in einer Menge von 0 bis 3 Gew.-% in der Tierstreu enthalten sein.

Anhaftendes Wasser ist in einer Menge von 0 bis 10 Gew.-%, beispielsweise 1 bis 5 Gew.-% enthalten.

Die Schüttdichte und besonders die Partikelgröße der Tierstreu kann in einem weiten Bereich schwanken. Die Tierstreu weist vorzugsweise eine Schüttdichte von 550 bis 1000 kg/m³, insbesondere von 600 bis 750 kg/m³ auf. Die Partikelgröße liegt bevorzugt zwischen 1 bis 10 mm, besonders bevorzugt zwischen 2 bis 7 mm.

Die Tierstreu eignet sich sowohl für Haustiere, insbesondere Katzen und Nagetiere, als auch für industriell gehaltene Tiere, beispielsweise Pelztiere. Besonders gut geeignet ist sie zur Anwendung für Katzen. Die optimale Teilchengröße der Tierstreu kann auf den jeweiligen Anwendungszweck abgestimmt sein; kleinere Partikel eignen sich für kleinere Tiere. Für Katzen liegt die Teilchengröße optimal im Bereich von 2 bis 6 mm in homogener Verteilung des Korngrößenspektrums.

Im folgenden wird die Herstellung der erfindungsgemäßen Tierstreu beschrieben. Das erfindungsgemäße Verfahren zur Herstellung der Tierstreu ist dadurch gekennzeichnet, daß man Zellulose, Zellulosederivate und/oder Zellulose enthaltende Materialien einer Partikelgröße von bis zu 1 mm, Beschwerungsmittel und Verdickungsmittel in Anwesenheit von Wasser miteinander vermischt, vorhandenes Wasser abtrennt und den verbleibenden Rückstand auf eine Partikelgröße oberhalb von 1 mm zerkleinert, wobei das Beschwerungsmittel in einer solchen Menge zugegeben wird, daß die Schüttdichte der Tierstreu oberhalb von etwa 500 kg/m³ liegt.

Sofern die Partikelgröße der zur Anwendung im Verfahren vorgesehenen Zellulose, des Zellulosederivates bzw. des Zellulose enthaltenden Materials noch nicht wie angegeben unterhalb von 1 mm, vorzugsweise unterhalb von 0,5 mm, z.B. zwischen 0,1 mm und 0,3 mm, liegt, wie dies beispielsweise bei Holz, Holzschnitzeln oder Altpalletten der Fall sein kann, wird das Material vor der Anwendung im erfindungsgemäßen Verfahren zerkleinert, beispielsweise gesägt oder geschreddert. Das Beschwerungsmittel liegt vor der Anwendung im Herstellungsverfahren zweckmäßig in einer Partikelgröße unterhalb von 0,2 mm, vorzugsweise unterhalb von 0,1 mm, z.B. zwischen 0,05 mm und 0,07 mm, vor. sofern es nicht bereits in Form derartiger Partikel vorliegt, wird es vor der Anwendung im erfindungsgemäßen Verfahren zerkleinert, z.B. gemahlen oder gebrochen. Der Verdicker wird zweckmäßig in Form von Partikeln in einer Teilchengröße unterhalb von 0,1 mm, vorzugsweise unterhalb von 0,05 mm, z.B. zwischen 0,02 mm und 0,04 mm, eingesetzt. Auch hier muß gegebenenfalls vorher eine Zerkleinerung erfolgen, z.B. durch Mahlen oder Brechen.

Die Vermischung erfolgt in Anwesenheit von Wasser, so daß sich eine Suspension bildet. Wasser ist zweckmäßig in einer Menge von 20 bis 80 Gew.-% bezogen auf die Gesamtmenge der Mischung vorhanden. Gewünschtenfalls kann man einen Teil oder die gesamten Ausgangsstoffe in Form einer wäßrigen Zubereitung im erfindungsgemäßen Verfahren einsetzen, beispielsweise in Form einer Aufschlämmung von Beschwerungsmittel und/oder Verdicker.

Die Vermischung kann durch übliche Vorrichtungen, beispielsweise Rührwerke, bewirkt werden.

Anschließend wird das vorhandene Wasser abgetrennt, beispielsweise durch Abfiltrieren, Abpressen und/oder Abdampfen. Zweckmäßig soll der Restgehalt an Wasser nicht höher als 10 Gew.-%, bezogen auf den nach der Wasserabtrennung erhaltenen, verbleibenden Rückstand betragen. Der verbleibende Rückstand wird dann auf die gewünschte Partikelgröße zerkleinert. Dies kann durch übliche Zerkleinerungsvorrichtungen bewirkt werden, beispielsweise durch Brecker. Bevorzugt zerkleinert man auf eine Partikelgröße von 1 bis 10 mm, besonders bevorzugt auf eine Partikelgröße von 2 bis 7 mm.

Bevorzugt setzt man das Beschwerungsmittel im erfindungsgemäßen Herstellverfahren in einer solchen Menge ein, daß die fertige Tierstreu eine Schüttdichte zwischen etwa 550 bis 1000 kg/m³, besonders bevorzugt eine Schüttdichte von 600 bis 750 kg/m³ aufweist.

Man kann Zellulose verschiedenster Quellen mit je nach Herkunft unterschiedlichen Kettenlängen im erfindungsgemäßen Herstellverfahren verwenden. Man kann auch natürliche oder industriell hergestellte hydrophile Zellulosederivate verwenden, beispielsweise Zellstoff, Hemizellulose oder Alkalizellulose.

Bevorzugt verwendet man Zellulose und/oder Zellulosederivate enthaltende Materialien pflanzlicher, landwirtschaftlicher oder industrieller Herkunft. Insbesondere verwendet man Holz, Produkte der Holzverarbeitung, beispielsweise Pappe, verleimtes Holz, Spanplatten, Bahnschwellen. Verwendbar sind weiterhin holzartige Substanzen, beispielsweise Stroh und Abkömmlinge, Rückstände der Stärkeherstellung, Rückstände der Zuckerindustrie.

Bevorzugt verwendet man ein Zellulose enthaltendes Material, insbesondere Holz, Holzverarbeitungsprodukte, oder Stroh.

Ganz besonders bevorzugt verwendet man Zellulose, Zellulosederivate und/oder Zellulose enthaltende Materialien, die als Rückstand oder Abfall insbesondere bei der landwirtschaftlichen oder industriellen Verarbeitung von Zellulose oder Zellulose enthaltenden Materialien anfallen oder aus der Wertstoffrückführung stammen, beispielsweise Abfälle wie Holz-, Spanplatten- oder Laminatholzschnitzel, Holzverschnitt, Sägemehl, Abfälle der Papierindustrie, der Lebensmittelindustrie, verbrauchte Holzprodukte wie Altpalletten, Holzkisten, Möbel, Spanplatten, Bruchholz, Eisenbahnschwellen oder beispielsweise auch verbrauchte Filterhilfsmittel auf Zellulosebasis.

Als Beschwerungsmittel verwendet man im Prinzip beliebige Materialien, insbesondere anorganische Materialien, die eine entsprechend hohe Dichte aufweisen. Zweckmäßig verwendet man Materialien, die eine Dichte oberhalb von etwa 2 g/cm³ aufweisen. Beispielsweise kann man Mineralien verwenden, die auch als Füllstoffe in der Kunststoffherstellung, als Kontrastmittel oder als Pigmente verwendet werden. Sehr gut geeignet sind beispielsweise Schwerspat oder Titandioxid. Feldspat, Calciumcarbonat sowie Calciumcarbonat enthaltende Mineralien wie Marmor sind aber auch gut geeignet.

Bevorzugt verwendet man als Beschwerungsmittel anorganische Materialien, die bei der Herstellung oder Verarbeitung von den vorgenannten Materialien als Abfallprodukte anfallen. Beispielsweise kann man Abfälle verwenden, wie sie bei der Gewinnung und Weiterverarbeitung von Mineralien wie Feldspat, oder Marmor anfallen. Sehr gut anwendbar sind auch Abfälle, Rückstände oder Fehlchargen aus der Füllstoff-, Pigment-, Zeolith- oder Kontrastmittelproduktion, z.B. auf Titandioxid- oder Bariumsulfat-Basis.

Zur Verbesserung der Eigenschaften der Ausgangsmaterialien verwendet man einen Verdicker, beispielsweise Kieselsäure, silikatische Mineralien, Zeolithe und/oder Alumosilikate natürlicher oder synthetischer Herkunft. Zur Anwendung eignen sich besonders natürlich vorkommende Kieselsäuren, z.B. Kieselgur, oder synthetische Kieselsäure, beispielsweise amorphe Kieselsäure. Weiterhin sehr gut geeignet sind auch Bentonite, Laponite, Magnesiumsilikate, Zeolithe sowie Abfälle oder Fehlchargen aus der Herstellung oder Verarbeitung von Kieselsäure, silikatischen Mineralien, Zeolithen oder Alumosilikaten.

Im erfindungsgemäßen Verfahren kann man außer den bevorzugt verwendeten vorstehend beschriebenen anorganischen Verdickern auch organische Verdicker anwenden, beispielsweise hochfein zerkleinerte Zellulose, die sonst als Filterhilfsmittel verwendet wird. Natürlich kann man auch bereits gebrauchte Filterhilfsmittel verwenden. Weiterhin geeignet als Verdicker sind Zellulosederivate, z.B. Zelluloseester oder Zelluloseether.

Als Verdicker beimischen kann man auch organische Polymere mit hohem Wasserbindungsvermögen, beispielsweise Polyacrylate, Natriumsalze von Polyacrylaten, Poly(alkylacrylate) und deren Alkalisalze und ähnliche Verbindungen. Solche Stoffe sind als "Superabsorbents" bekannt.

Selbstverständlich kann man auch Gemische von Verdickern einsetzen, die man gleichzeitig oder nacheinander beimischen kann.

In einer besonders bevorzugten Ausführungsform des erfindungsgemäßen Verfahrens mischt man sowohl einen Verdicker, z.B. Bentonit, als auch ein "Superabsorbent", insbesondere ein Polyacrylat. Das Gewichtsverhältnis von Verdicker zu "Superabsorbent" beträgt vorteilhafterweise etwa 10:1 bis 50:1. Die Wirkung der anorganischen Verdicker wird hier um ein Vielfaches verstärkt.

Weiterhin kann man auch ein Bindemittel beimischen. Dies ist dann notwendig, wenn die Bestandteile der Tierstreu nicht ausreichend aneinander haften, beispielsweise wenn das Zellulosematerial aus glatten Partikeln besteht. Ein besonders gutes Bindemittel ist Bentonit.

Die Vermischung der vorstehend erläuterten Komponenten ist nicht kritisch. Gewünschtenfalls kann man zunächst eine Vormischung zweier Komponenten, beispielsweise von Zellulose und Verdicker, erzeugen, und die dritte Komponente zugeben. Das für die Herstellung notwendige Wasser kann in einer oder mehreren der Komponenten enthalten sein oder separat zugegeben werden. Selbstverständlich kann man die benötigten Komponenten aber auch unmittelbar vermischen.

Vor, während oder nach der Durchführung des erfindungsgemäßen Herstellverfahrens kann man noch Zusätze beifügen, die die anwendungstechnischen Eigenschaften weiter verbessern. Beispielsweise kann man antibakterielle Mittel Desinfektionsmittel, Verrottungshilfsmittel, die geruchsbindende Wirkung verstärkende Mittel, und andere Hilfsstoffe, beispielsweise Duftstoffe oder Farbstoffe, beimischen.

Als Desinfektionsmittel verwendet man vorzugsweise mineralsaure Tonerde, insbesondere Aluminiumsulfat, oder Peroxid-Verbindungen wie Calciumperoxid. Als Verrottungshilfsmittel verwendet man bevorzugt Calciumperoxid. Als die geruchsbindende Wirkung verstärkendes Mittel verwendet man bevorzugt basische Mittel, insbesondere kohlensaure Alkalimetallsalze, beispielswiese Natriumcarbonat oder Natriumhydrogencarbonat.

Das Mengenverhältnis der im erfindungsgemäßen Herstellverfahren einzusetzenden Ausgangskomponenten kann in einem weiten Bereich schwanken. Zweckmäßig setzt man die Komponenten in einer solchen Menge ein, daß die unter a) genannte Zellulose bzw. Zelluloseprodukte in einer Menge von 20 bis 60 Gew.-%, vorzugsweise 40 bis 50 Gew.-%, das Beschwerungsmittel in einer Menge von 20 bis 70 Gew.-%, vorzugsweise von 40 bis 60 Gew.-%, und der Verdicker in einer Menge von 0,5 bis 50 Gew.-%, vorzugsweise 1 bis 20 Gew.-%, insbesondere von 4 bis 8 Gew.-% in der fertigen Tierstreu enthalten sind.

Hilfsstoffe, sofern man sie beimischt, setzt man zweckmäßig in der zur Entfaltung ihrer Wirkung notwendigen Menge ein. Desinfektionsmittel beispielsweise setzt man in einer Menge von 0 bis 4 Gew.-%, vorzugsweise 1 bis 3 Gew.-%, Verrottungshilfsmittel in einer Menge von 0 bis 15 Gew.-%, vorzugsweise 4 bis 8 Gew.-%, das die Geruchsbindung verstärkende Mittel in einer Menge von 0 bis 15 Gew.-%, vorzugsweise von 5 bis 10 Gew.-%, und Duft- und Farbstoffe in einer Menge von 0 bis 3 Gew.-% ein.

Die vorstehenden Prozentangaben beziehen sich jeweils auf das Gesamtgewicht der fertigen Tierstreu.

Die Tierstreu kann man gewünschtenfalls trocknen, so daß kein oder fast kein Wasser mehr anhaftet. Gewünschtenfalls kann man die Tierstreu aber auch derart herstellen, gegebenenfalls unter Zusatz von Wasser oder teilweiser Trocknung, daß der Wassergehalt bis 10 Gew.-%, beispielsweise zwischen 1 und 5 Gew.-%, bezogen auf das Gesamtgewicht der fertigen Tierstreu, beträgt.

Ein weiterer Gegenstand ist die nach diesem Verfahren erhältliche Tierstreu, vorzugsweise Tierstreu, deren Gehalt an Verdicker und/oder Bindemittel 0,5 bis 50 Gew.-%, bezogen auf das Gesamtgewicht der Tierstreu, beträgt, insbesondere Tierstreu, deren Gehalt an Beschwerungsmittel zwischen 20 und 70 Gew.-%, bezogen auf das Gesamtgewicht der Tierstreu, beträgt.

Die folgenden Beispiele sollen die vorliegende Erfindung weiter erläutern, ohne sie in ihrem Umfang einzuschränken.

### Beispiel 1

58 g Bentonit und 7 g Laponite wurden in 1300 g Wasser unter schnellem Rühren eingetragen. Danach wurden unter weiterem Rühren als Beschwerungsmittel etwa 428 g Schwerspat (BaSO₄) zugemischt, bis eine stabile Suspension vorlag. Diese Suspension wurde über 500 g Zellulose in Form von Frischholzsägespänen (Sägemehl) abfiltriert, bis das Filtrat als klare Flüssigkeit austrat. Hierbei verteilten sich die anorganischen Materialien gleichförmig im Sägemehl. Der gebildete Filterkuchen wurde dann auf einer Filterpresse von der Hauptmenge des anhaftenden Wassers befreit. Die dabei entstehende Platte wurde auf eine mittlere Korngröße von 7 mm gebrochen und mit dem partikelförmigen Polyacrylat vermischt.

Das Gemisch wurde bei 80 °C getrocknet und abgesiebt und war sodann gebrauchsfertig. Es bestand überwiegend aus Partikeln einer mittleren Korngröße von etwa 7 mm.

Das abgesiebte Unterkorn unter 2 mm wurde in den Preßvorgang wieder zurückgeführt.

### Beispiel 2

Beispiel 1 wurde wiederholt. Diesmal wurde die entstehende Platte auf eine Partikelgröße von 4 mm gebrochen, mit Polyacrylat vermischt, getrocknet und abgesiebt und war dann gebrauchsfertig.

## Patentansprüche

1. Tierstreu, umfassend
a) Zellulose, Zellulosederivate und/oder Zellulose enthaltende Materialien,
b) Beschwerungsmittel
c) Verdicker und/oder Bindemittel,
wobei die Tierstreu eine Schüttdichte oberhalb von etwa 500 kg/m³ aufweist und in Form von Partikeln einer Teilchengröße oberhalb von 1 mm vorliegt.

2. Tierstreu nach Anspruch 1, dadurch gekennzeichnet, daß die Tierstreu Zellulose enthaltende Materialien, vorzugsweise Holz, Holzprodukte, Rückstände aus der Holzverarbeitung und/oder Stroh enthält.

3. Tierstreu nach Anspruch 1 oder 2, dadurch gekennzeichnet, daß sie als Beschwerungsmittel Mineralien, vorzugsweise Zeolithe, Füllstoffe oder Pigmente, besonders bevorzugt Schwerspat, Flußspat, Titandioxid oder Calciumcarbonat-haltige Materialien enthält.

4. Tierstreu nach einem der vorhergehenden Ansprüche, dadurch gekennzeichnet, daß sie als Verdicker synthetische oder natürliche Kieselsäure, silikatische Mineralien und/oder Alumosilikate, Zeolithe, bevorzugt Bentonite, Magnesiumsilikate oder amorphe Kieselsäure, oder organische hydrophile Gelbildner, insbesondere Polyacrylat enthält.

5. Tierstreu nach einem der vorhergehenden Ansprüche, dadurch gekennzeichnet, daß sie weiterhin ein Desinfektionsmittel, vorzugsweise mineralsaure Tonerde oder Peroxid-Verbindungen enthält.

6. Tierstreu nach einem der vorhergehenden Ansprüche, dadurch gekennzeichnet, daß sie weiterhin ein Verrottungshilfsmittel, vorzugsweise Calciumperoxid, enthält.

7. Tierstreu nach einem der vorhergehenden Ansprüche, dadurch gekennzeichnet, daß sie ein die Geruchsbindung verstärkendes basisches Mittel, vorzugsweise ein kohlensaures Alkalimetallsalz, enthält.

8. Tierstreu nach einem der vorhergehenden Ansprüche, dadurch gekennzeichnet, daß sie eine Schüttdichte von 550 bis 1000 kg/m³, vorzugsweise 600 bis 750 kg/m³ aufweist.

9. Tierstreu nach einem der vorhergehenden Ansprüche, dadurch gekennzeichnet, daß sie eine Partikelgröße von 1 bis 10 mm, vorzugsweise 2 bis 7 mm aufweist.

10. Verfahren zur Herstellung der Tierstreu nach einem der vorhergehenden Ansprüche, dadurch gekennzeichnet, daß man Zellulose, Zellulosederivate und/oder Zellulose enthaltende Materialien einer Partikelgröße von bis zu 1 mm, Beschwerungsmittel und Verdickungsmittel in Anwesenheit von Wasser miteinander vermischt, vorhandenes Wasser abtrennt und den verbleibenden Rückstand auf eine Partikelgröße oberhalb von 1 mm zerkleinert, wobei das Beschwerungsmittel in einer solchen Menge zugegeben wird, daß die Schüttdichte der Tierstreu nach einer Trocknung oberhalb von etwa 500 kg/m³ liegt.

11. Verfahren nach Anspruch 10, dadurch gekennzeichnet, daß man vor, während oder nach der Vermischung der Ausgangskomponenten weiterhin ein Desinfektionsmittel, ein Verrottungshilfsmittel und/oder ein die Geruchsbildung verringerndes Mittel beimischt.

12. Verfahren nach Anspruch 10 oder 11, dadurch gekennzeichnet, daß man als Zellulose enthaltende Materialien Holz, Holzprodukte, Rückstände aus der Holzverarbeitung und/oder Stroh verwendet.

13. Verfahren nach einem der Ansprüche 10 bis 12, dadurch gekennzeichnet, daß man als Beschwerungsmittel Mineralien, insbesondere Pigmente verwendet.

14. Verfahren nach einem der Ansprüche 10 bis 13, dadurch gekennzeichnet, daß man als Verdicker synthetische oder natürliche Kieselsäure, silikatische Mineralien und/oder Alumosilikate, bevorzugt Bentonite, Magnesiumsilikate oder amorphe Kieselsäure oder organische Gelbildner, insbesondere Polyacrylat, verwendet.

15. Verfahren nach einem der Ansprüche 10 bis 14, dadurch gekennzeichnet, daß man das Beschwerungsmittel in einer solchen Menge zugibt, daß eine Schüttdichte von 550 bis 1000 kg/m³, vorzugsweise 600 bis 750 kg/m³ eingestellt wird.

16. Verfahren nach einem der Ansprüche 10 bis 15, dadurch gekennzeichnet, daß man den nach dem Vermischen verbleibenden Rückstand auf eine Partikelgröße von 1 bis 10 mm, vorzugsweise 2 bis 7 mm verkleinert.

17. Tierstreu, erhältlich nach einem Verfahren gemäß den Ansprüchen 10 bis 16.

18. Tierstreu nach einem der Ansprüche 1 bis 9 oder 17, dadurch gekennzeichnet, daß der Gehalt an Verdicker und/oder Bindemittel 0,5 bis 50 Gew.-%, bezogen auf das Gesamtgewicht der Tierstreu, beträgt.

19. Tierstreu nach einem der Ansprüche 1 bis 9, 17 oder 18, dadurch gekennzeichnet, daß der Gehalt an Beschwerungsmittel zwischen 20 und 70 Gew.-%, bezogen auf das Gesamtgewicht der Tierstreu, beträgt.
